Europäisches Patentamt

**European Patent Office**

Office européen des brevets

(19)

(11) Numéro de publication: **0 071 549**

**A1**

## (12) DEMANDE DE BREVET EUROPEEN

(21) Numéro de dépôt: **82420102.4**

(22) Date de dépôt: **13.07.82**

(51) Int. Cl.³: **H 01 R 4/18**
   **F 16 G 11/02**

(30) Priorité: **15.07.81 FR 8114115**

(43) Date de publication de la demande:
   **09.02.83 Bulletin 83/6**

(84)' Etats contractants désignés:
   **AT BE CH DE GB IT LI LU NL SE**

(71) Demandeur: **Etablissements Dervaux Société anonyme:**
   **71 rue de Monceau**
   **F-75008 Paris-Seine(FR)**

(72) Inventeur: **Saint-Prix, Robert**
   **14 rue Edouard-Petit**
   **F-42000 Saint-Etienne(FR)**

(72) Inventeur: **Montmartin, Henri**
   **5D rue Voltaire**
   **F-42240 Unieux(FR)**

(74) Mandataire: **Perrier, Jean-Pierre et al,**
   **Cabinet GERMAIN & MAUREAU 12 rue de la République**
   **F-42000 St-Etienne(FR)**

(54) Manchon d'ancrage et de jonction pour conducteur électrique hétérogène.

(57) Ce manchon est destiné à être utilisé en particulier sur des câbles électriques du type hétérogène, c'est-à-dire comportant une âme composée de plusieurs brins d'acier (3) lui servant d'armature, et d'une enveloppe conductrice formée par une ou plusieurs couronnes de brins (4) en aluminium ou alliage similaire.

L'alésage cylindrique (5) du manchon a une section non circulaire et est composé de secteurs de contact (7) séparés par des zones de liaison (8) formées par des gorges (6) dont la déformation mécanique permet le rapprochement des secteurs de contact (7). Sous l'action des contraintes du rétreint, les secteurs de contact (7) sont appliqués sous pression contre les brins extérieurs (4), d'autant plus facilement que les zones de liaison (8) sont déformées grâce aux gorges (6) formant zones de dégagement de matière.

FIG_1

EP 0 071 549 A1

Manchon d'ancrage et de jonction pour conducteur électrique hétérogène.

La présente invention concerne un manchon d'ancrage et de jonction destiné à être rétreint sur un conducteur électrique hétérogène,c'est-à-dire comportant une âme en brins d'acier lui servant d'armature et une enveloppe extérieure composée de brins en aluminium ou autre alliage similaire conducteur de l'électricité.

Traditionnellement,ces manchons comportent un alésage cylindrique de section circulaire.Lors du rétreint,les contraintes radiales se répartissent autour de l'alésage cylindrique qui,par effet de voûte,ne les répercute pas intégralement aux brins extérieurs du câble hétérogène.De même,sous l'action de ces contraintes,les brins extérieurs viennent en contact les uns des autres,et par effet de pont,ne transmettent pas intégralement les efforts qu'ils reçoivent aux brins de l'âme en acier .Il en résulte, d'une part,que l'âme en acier est mal tenue et,d'autre part,que les brins extérieurs,réalisés dans un matériau ayant un plus grand coefficient d'allongement que celui du matériau des brins intérieurs et soumis à des contraintes supérieures à celles s'exerçant sur ces brins intérieurs,s'allongent davantage que ceux intérieurs et forment,à la sortie du manchon,un renflement couramment dénommé "cage d'oiseau".

Pour obtenir une bonne tenue de l'âme,il est nécessaire d'avoir recours à des manchons exerçant des contraintes de serrage radiales différentes sur l'âme et l'enveloppe et exigeant de séparer les torons de l'enveloppe pour accéder directement à l'âme.Cette opération demande du temps et interdit de monter le manchon sur un conducteur sous tension électrique.

L'invention a pour but de remédier à ces inconvénients en fournissant un manchon qui,pour une même valeur des contraintes radiales entraînant son rétreint,assure une meilleure tenue du câble et,évite l'effet de cage d'oiseau sur les câbles hétérogènes,sans pour autant exiger de séparer localement les torons de l'enveloppe pour ac-

céder à l'âme.

A cet effet,l'alésage de ce manchon a une section non circulaire,qui a pour effet de casser l'effet de voûte,et est composé de faces de contact qui,aptes à être appliquées sous pression contre les brins extérieurs du câble, sont séparées par des zones de liaison dont la déformation mécanique permet le rapprochement de ces faces de contact .

Lors du rétreint de ce manchon sur un conducteur,l'effet de voûte de l'alésage et l'effet de pont des brins extérieurs sont cassés et ces derniers peuvent,en se répartissant différemment,transmettre,aux brins de l'âme , la totalité des contraintes qu'ils reçoivent .Le maintien de l'âme est ainsi assuré dans d'excellentes conditions.

L'invention sera mieux comprise à l'aide de la description qui suit en référence au dessin schématique annexé représentant,à titre d'exemple non limitatif,une forme d'exécution de ce manchon.

Figure 1 est une vue en coupe transversale le montrant après engagement sur l'extrémité d'un câble hétérogène, mais avant rétreint,

Figure 2 est une vue similaire à la figure 1,mais montrant le manchon après rétreint sur le câble,

Figures 3 et 4 sont des vues en perspective ,avec coupe partielle,montrant respectivement ,un manchon de jonction et un manchon d'ancrage,munis de l'alésage selon l'invention.

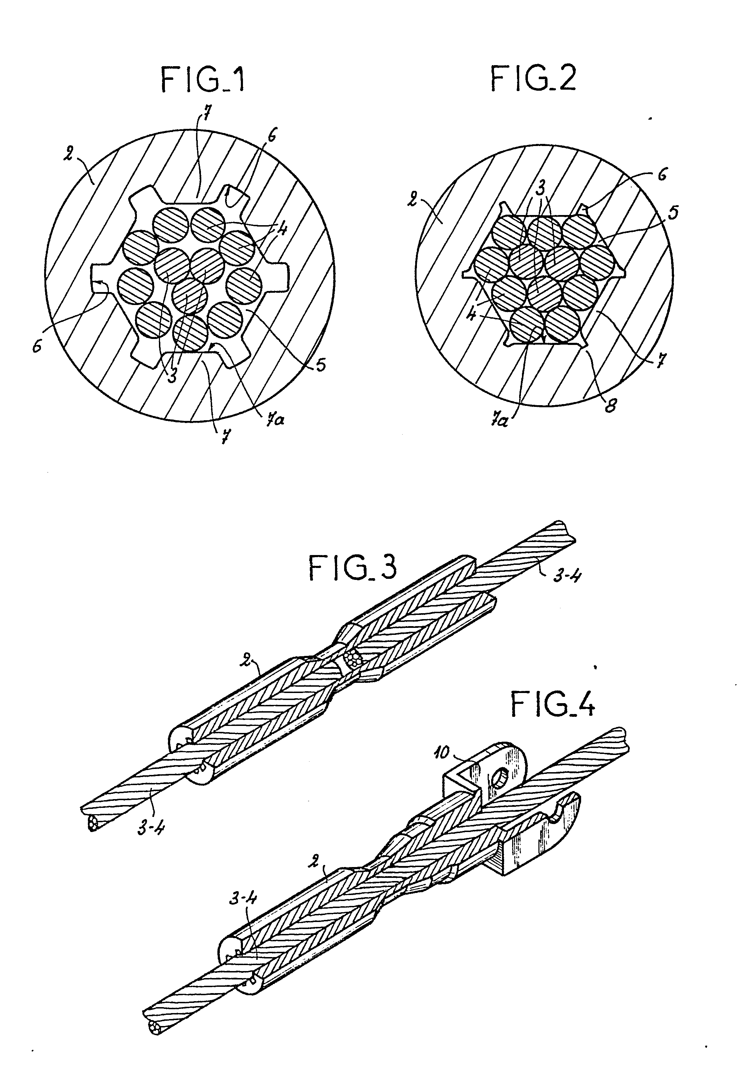

Plus précisément,les figures 1 et 2 montrent un manchon 2 dans le cas de son application,à l'ancrage d'un conducteur électrique hétérogène composé d'une âme centrale formée de trois brins 3 en acier et d'une enveloppe extérieure formée par une couronne de neuf brins 4 en aluminium ,alliage d'aluminium ou matériau similaire conducteur de l'électricité.

Dans cette forme d'exécution,l'alésage 5 du manchon 2 présente six gorges longitudinales 6 délimitant entre elles des nervures 7 dont les faces de contact 7a forment un polygone et,notamment,un hexagone .Les fonds des gorges 6 délimitent,avec la paroi du manchon,des zones ou ponts de liaison 8 entre les diverses nervures 7.

Comme cela ressort de l'examen des figures 1 et 2,les gorges 6 cassent l'effet de voûte qui existerait dans ce manchon en leur absence.En effet,lors du rétreint du manchon,l'affaiblissement de la paroi ,dû aux ponts de liaison 8,autorise le rapprochement radial des faces de contact 7a.De plus,les gorges 6 forment des zones de dégagement pour la matière,lorsque celle-ci est soumise aux contraintes du rétreint.Il en résulte une réduction du périmètre embrassé par les faces de contact 7a des nervures 7, et une forte compression de ces faces de contact 7 sur les brins extérieurs 4 du conducteur 3-4. Le fait que certains brins 4 du câble 3-4 ne soient pas en contact avec une face 7a des nervures 7,a pour effet de casser l'effet de pont dans la couronne de brins 4 correspondante et,par conséquent,de diminuer la réaction du conducteur sur le manchon 2,réaction qui s'oppose à son rétreint.

Des essais de traction,jusqu'à glissement du conducteur par rapport au manchon rétreint,ont montré que les manchons selon l'invention assuraient une tenue du conducteur qui,supérieure à celle obtenue par les manchons actuels,soumis aux mêmes contraintes de rétreint,était aussi supérieure à celle considérée comme optimale pour ce type de conducteur.

Il faut noter que cette possibilité de rétreint du manchon 2 a aussi,pour effet,de diminuer son allongement, notamment lorsque le rétreint est obtenu par étirage,ce qui,par conséquent,élimine pratiquement tout risque de formation d'une cage d'oiseau à la sortie du manchon par les brins 4 en aluminium.

Il est évident que l'invention ne se limite pas à la forme d'exécution qui a été décrite ci-dessus et,qu'au contraire,elle en embrasse toutes les variantes de réalisation ,quels que soient ,notamment, la section transversale des gorges,leur nombre et leur répartition ,de même que la forme et la répartition des nervures ,et la forme géné-

4

rale de la section non circulaire de l'alésage 5.

C'est ainsi que ce manchon peut présenter extérieurement une forme cylindrique à section circulaire,comme représenté,ou non circulaire,c'est-à-dire une section polygonale régulière ou non pourvue ou non de gorges, cannelures ou nervures longitudinales.De même,la section polygonale de son alésage peut être régulière ou non et être délimitée par des faces planes,convexes ou concaves. Enfin,les gorges et nervures peuvent être rectilignes, mais aussi hélicoïdales,continues ou discontinues.

Le rétreint de ce manchon peut être assuré par tous les moyens et techniques connus,tels qu'étirage,compression,martelage ou similaire,sans que cela modifie la tenue du conducteur.

Ce manchon peut être monté sur tout conducteur hétérogène composé d'une âme formée par plusieurs brins ou plusieurs couronnes de brins,et d'une enveloppe extérieure conductrice formée d'une ou plusieurs couronnes de brins, mais aussi,sur tout conducteur homogène ,et sur des câbles mécaniques . Lorsqu'il est utilisé pour assurer la jonction de deux conducteurs interrompus,il a la forme générale tubulaire représentée à la figure 3 .Il faut noter que,dans cette application,et grâce à la bonne tenue du conducteur après rétreint sur lui,tenue n'obligeant pas, comme c'est le cas avec les manchons actuels,à séparer au moins localement l'enveloppe extérieure conductrice de l'âme intérieure en acier,ce manchon peut être posé à distance sur un conducteur sous tension électrique.Il permet ainsi de ne pas avoir à interrompre la distribution du courant,par exemple pour la mise en place d'une dérivation temporaire sur une ligne d'alimentation endommagée.

Lorsque le manchon est utilisé pour assurer l'ancrage d'un conducteur,il se prolonge,comme montré figure 4,par une chape 10 qui est traversée par le conducteur sortant de l'alésage du manchon.Ce dépassement indique que le rétreint est assuré sur la longueur voulue du conducteur et garantit la qualité de l'ancrage qui,par ailleurs,s'effectue sans avoir à séparer l'enveloppe de l'âme.

## -REVENDICATIONS-

1-Manchon d'ancrage et de jonction apte à être rétreint sur un conducteur électrique hétérogène et comportant un alésage interne (5),caractérisé en ce que son alésage (5) a une section non circulaire qui a pour effet de casser l'effet de voûte,et est composé de faces de contact (7a) qui,aptes à être appliquées sous pression contre les brins extérieurs (4) du conducteur,sont séparées par des zones de liaison (8) dont la déformation mécanique permet le rapprochement des faces de contact (7a) .

2-Manchon selon la revendication 1,caractérisé en ce que les faces de contact (7a) sont celles de nervures longitudinales (7) séparées par des gorges longitudinales (6) délimitant des ponts de liaison (8) avec la paroi du manchon (2).

3-Manchon selon l'ensemble des revendications 1 et 2, caractérisé en ce que les faces de contact (7a) des nervures longitudinales (7) délimitent un polygone.

4-Manchon selon l'une quelconque des revendications 1 à 3,caractérisé en ce que les faces de contact sont planes.

5-Manchon selon l'une quelconque des revendications 1 à 3,caractérisé en ce que les faces de contact sont concaves.

6-Manchon selon l'une quelconque des revendications 1 à 3,caractérisé en ce que les faces de contact sont convexes.

7-Manchon selon l'une quelconque des revendications 1 à 6,caractérisé en ce que les faces de contact sont rectilignes.

8-Manchon selon l'une quelconque des revendications 1 à 6,caractérisé en ce que les faces de contact sont hélicoïdales.

9-Manchon selon l'une quelconque des revendications 1 à 8,caractérisé en ce que les faces de contact sont discontinues.

0071549

FIG_1

FIG_2

FIG_3

FIG_4

Office européen
des brevets

**RAPPORT DE RECHERCHE EUROPEENNE**

EP 82 42 0102

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | GB-A- 938 242 (BURNDY) *Page 1, lignes 40-77; figures 1-4* | 1,5,9 | H 01 R 4/18 F 16 G 11/02 |
| | --- | | |
| A | DE-B-1 016 512 (BROCKERS) *Page 1, figures 1-4* | 1,8,9 | |
| | --- | | |
| A | GB-A- 718 602 (ROHLAND) *Page 2, lignes 17-113; figures 1-4* | 1 | |
| | --- | | |
| A | US-A-2 939 732 (ROCHESTER) *Colonne 2, ligne 26 - colonne 5, ligne 36; figures 1-9* | 1,8 | |
| | --- | | |
| A | US-A-3 015 685 (BERGNER) *Colonne 2, lignes 33-68; colonne 3, lignes 17-67; figures 1-4,10-12* | 1 | DOMAINES TECHNIQUES RECHERCHES (Int. Cl. ³) |
| | ----- | | H 01 R 4/00 H 02 G 7/00 F 16 G 11/00 |

Le présent rapport de recherche a été établi pour toutes les revendications

| Lieu de la recherche LA HAYE | Date d'achèvement de la recherche 13-10-1982 | Examinateur LOMMEL A. |
|---|---|---|